# EUROPÄISCHE PATENTANMELDUNG

(11) **EP 1 647 469 A1**
(43) Veröffentlichungstag der Anmeldung: **19.04.2006**
(21) Anmeldenummer: 04026879.9
(22) Anmeldetag: 12.11.2004
(51) Int. Cl.: B62D 25/14

(54) **Instrumententafelträgerstruktur eines Kraftfahrzeuges**

(30) Priorität: 12.10.2004 EP 04405637
(71) Anmelder: Alcan Technology & Management Ltd., 8212 Neuhausen am Rheinfall (CH)
(72) Erfinder: Feuerstein, Martin, 78224 Singen (DE)

(57) **Zusammenfassung**

Die Erfindung betrifft eine Instrumententafelträgerstruktur (1) eines Kraftfahrzeuges, enthaltend wenigstens einen quer zur Fahrzeuglängsrichtung verlaufenden Trägerarm (2), wobei die Instrumententafelträgerstruktur (1) fahrer- und beifahrerseitig über den wenigstens einen Trägerarm (2) an eine Karosseriestruktur angebunden ist, und zwischen der Karosseriestruktur im Bereich der Instrumententafelträgerstruktur (1) wenigstens eine Reibschlussverbindung (5a, 5b) vorgesehen ist, welche im Aufprallereignis ein definiertes Zurückweichen des Trägerarms (2) erlaubt. Die Erfindung zeichnet sich dadurch aus, dass die Reibschlussverbindung (5a, 5b) eine Langloch-Reibschlussverbindung aus zwei sich überlappende Verbindungsteile ist, und ein erstes Verbindungsteil ein Langloch aufweist, in welches wenigstens ein Befestigungsbolzen oder -schaft eingreift, über welchen das erste Verbindungsteil reibschlüssig mit dem zweiten Verbindungsteil verbunden ist, derart dass sich die Verbindungsteile bei Überschreiten eines bestimmten Kraftniveaus unter Abbau von kinetischer Energie relativ zueinander verschieben und der Befestigungsbolzen oder -schaft unter Längung des Verbindungsbereichs durch das Langloch gezogen wird.

## Beschreibung

Vorliegende Erfindung betrifft eine Instrumententafelträgerstruktur eines Kraftfahrzeuges, enthaltend wenigstens einen quer zur Fahrzeuglängsrichtung verlaufenden Trägerarm, wobei die Instrumententafelträgerstruktur fahrer- und beifahrerseitig über den wenigstens einen Trägerarm an eine Karosseriestruktur angebunden ist, und zwischen der Karosseriestruktur im Bereich der Instrumententafelträgerstruktur wenigstens eine Reibschlussverbindung vorgesehen ist, welche im Aufprallereignis ein definiertes Zurückweichen des Trägerarms erlaubt.

Instrumententafelträgerstrukturen, nachfolgend vereinfachend Querträgerstrukturen genannt, werden in der Automobilindustrie im Karosseriebau verwendet. Als Teil einer Kraftfahrzeugkarosserie ist die Querträgerstruktur zwischen den sogenannten A-Säulen, den ersten Säulen in der Seitenwand des Fahrzeuges, die zur Aufnahme einer Vordertüre dienen, angeordnet und mit diesen verbunden. Die Querträgerstruktur ist im Bereich unterhalb der Windschutzscheibe etwa horizontal verlaufend angeordnet.

Die Querträgerstruktur ist in der Regel gegen die Stirnwand, also die Trennwand zwischen Motorenraum und Fahrzeuginnenraum, sowie gegen den Fahrzeugboden hin zusätzlich abgestützt.

Die Querträgerstruktur dient zur Befestigung der Instrumententafel, wobei der Querträgerstruktur ausserdem die Aufgabe zukommt, die Instrumententafel auszusteifen. An die Querträgerstruktur sind daher Halterungen vorgesehen, an denen unter anderem die Instrumententafel, ferner eventuell eine Mittelkonsole und die Lenkeinrichtung befestigt werden.

Es ist bekannt die Querträgerstruktur über Seitenhalterelemente an die A-Säule anzubinden, wobei die Querträgerstruktur hierzu bsp. im rechtwinkligen Stoss an den Seitenhalter geschweisst wird.

Im Falle eines Aufprallereignisses, bei welchem die Kräfte eines Frontalaufpralls quer zur Längsrichtung der Instrumententafel einwirken, kommt es in der Regel zuerst an den Anbindungsstellen zwischen Querträgerstruktur und Karosseriestruktur zu einem Versagen der Konstruktion. So wird bsp. die Querträgerstruktur bei Überschreiten eines bestimmten Kraftniveaus entlang seiner Schweissnähte vom besagten Seitenhalter oder von der A-Säule abgerissen.

Besteht die Querträgerstruktur aus mehreren gefügten, z.B. verschweissten Profilteilen, so tritt das Strukturversagen häufig auch im Bereich der Fügestellen in der Querträgerstruktur selbst auf.

In jedem Fall ist das oben beschriebene strukturelle Versagen hinsichtlich des Insassenschutzes unerwünscht. Durch das abrupte Versagen der Querträgerstruktur werden die einwirkenden Aufprallkräfte direkt in die Fahrgastzelle eingeleitet. Ferner gefährdet das Eindringen von losgelösten Fahrzeugteilen, insbesondere von Querträgerteilen, in den Fahrgastraum die Insassen. Dies gilt es auf jeden Fall zu verhindern.

Der Erfindung liegt deshalb die Aufgabe zugrunde, eine Instrumententafelträgerstruktur vorzuschlagen, welche einerseits durch ihre besondere Konstruktion Aufprallenergie aufzunehmen vermag, und bei welcher es andererseits möglich ist, bei einem Frontalaufprall ein definiertes Zurückweichen der Querträgerstruktur zu erreichen.

Erfindungsgemäss wird die Aufgabe dadurch gelöst, dass die Reibschlussverbindung eine Langloch-Reibschlussverbindung aus zwei sich überlappenden Verbindungsteilen ist, und ein erstes Verbindungsteil ein Langloch aufweist, in welches wenigstens ein Befestigungsbolzen oder -schaft eingreift, über welchen das erste Verbindungsteil reibschlüssig mit dem zweiten Verbindungsteil verbunden ist, derart dass sich die Verbindungsteile bei Überschreiten eines bestimmten Kraftniveaus unter Abbau von kinetischer Energie relativ zueinander verschieben und der Befestigungsbolzen oder -schaft unter Längung des Verbindungsbereichs durch das Langloch gezogen wird.

Zur Einstellung des gewünschten Kraftniveaus gibt es zwei Möglichkeiten:
1. Die Breite des Langlochs wird kleiner gewählt als der Durchmesser des Befestigungsbolzens oder -schaftes. Bei einer Zugbelastung des Verbindungselementes wird der Befestigungsbolzens oder -schaft bei Erreichen eines bestimmten Kraftniveaus innerhalb des Langlochs gezogen, wobei sich das erste Verbindungsteil im Bereich des Langlochs durch die eintretende Langlochaufweitung verformt.
2. Über die Klemmverbindung wird eine Flächenpressung zwischen den beiden Verbindungsteilen erzeugt. Das zu erzielende Kraftniveau ist abhängig vom Reibungswiderstand zwischen den Verbindungsteilen. Bei einer Schraubverbindung wird die Flächenpressung durch das Anzugsmoment der Schrauben eingestellt.

Die beiden vorstehend erwähnten Möglichkeiten zur Einstellung eines gewünschten Kraftniveaus können einzeln oder kombiniert angewendet werden.

Soll das Kraftniveau über die Reibung zwischen den beiden Verbindungsteilen eingestellt werden, kann die Reibung durch Aufrauhung wenigstens einer der einander anliegenden Oberflächen der Elementteile erhöht werden. Soll das Kraftniveau ausschliesslich über die Reibung zwischen den beiden Verbindungsteilen eingestellt werden wird die Breite des Langlochs gleich gross oder grösser gewählt als der Durchmesser des Befestigungsbolzens oder -schaftes.

Soll das Kraftniveau unter anderem durch die Breite des Langloches eingestellt werden, so weist das Langloch einen Langlochbereich mit kleinerer Weite als der Durchmesser des Befestigungsbolzens oder -schaftes auf, wobei der Befestigungsbolzen beim Längen des Verbindungsabschnittes durch diesen Langlochbereich gezogen wird. Ferner enthält der Langlochbereich, bevorzugt an einem seiner Endabschnitte, einen Langlochbereich zur Aufnahme des Befestigungsbolzens - oder schaftes, wobei dessen Weite dem Durchmesser des Befestigungsbolzens oder -schaftes entspricht oder grösser ist.

In bevorzugter Ausführung der Erfindung ist der Trägerarm fahrerseitig und/oder beifahrerseitig über die Langloch-Reibschlussverbindung mit der Fahrzeugkarosserie, insbesondere mit den A-Säulen, verbunden. Der Trägerarm kann direkt oder indirekt, bsp. über sogenannte Seitenhalter, mit der Karosseriestruktur verbunden sein. In diesem Fall entspricht das eine Verbindungsteil, vorzugsweise das erste, dem Trägerarm und das andere Verbindungsteil, vorzugsweise das zweite, dem Seitenhalter oder der Karosseriestruktur bzw. A-Säule.

Die Instrumententafelträgerstruktur kann auch mehrteilig ausgebildet sein, wobei mehrere und vorzugsweise zwei Trägerarme zu einem Querträger verbunden sind. Gemäss dieser Ausführungsvariante ist können eine oder mehrere Verbindungen zwischen zwei Trägerarmen in Form einer Langloch-Reibschlussverbindung vorliegen. Ein erstes Verbindungsteil entspricht vorzugsweise einem ersten und ein zweites Verbindungsteil einem zweiten Trägerarm.

Der Trägerarm ist jedoch bevorzugt als durchgängiger Querträger ausgebildet, wobei die Langloch-Reibschlussverbindungen bevorzugt ausschliesslich im Bereich einer oder beider Karosserieanbindungen vorgesehen ist. Durchgängig bedeutet hier, dass der Querträger von der fahrerseitigen Karosserie-Anbindung (z.B. A-Säule) zur beifahrerseitigen Karosserie-Anbindung (z.B. A-Säule) reicht. Der Querträger ist mittels entsprechenden Befestigungsmittel direkt an die Karosserie oder über einen zwischen Querträger und Karosserie angeordneten Seitenhalter an die Karosserie angebunden.

In bevorzugter Ausführung der Erfindung ist die Langloch-Reibschlussverbindung eine Schraubverbindung, enthaltend einen Schraubenschaft mit Gewinde sowie eine Schraubenmutter, wobei der Schraubenschaft unter anderem durch das Langloch geführt und auf seiner Austrittseite über die Schraubenmutter reibschlüssig fixiert ist.

Der Schraubenschaft enthält ferner bevorzugt einen Schraubenkopf. Der Schraubenschaft gemäss dieser Ausführung ist bevorzugt durch eine Öffnung im zweiten Verbindungsteil sowie durch das Langloch im ersten Verbindungsteil hindurch geführt und auf seiner Austrittseite über die Schraubenmutter reibschlüssig fixiert. Der Schraubenkopf liegt hierbei der Eintrittsseite des Schraubenschaftes im ersten oder zweiten Verbindungsteil an. Die Austrittseite des Schraubenschaftes kann im ersten oder zweiten Verbindungsteil sein. Bevorzugt liegt die Austrittseite des Endabschnittes des Schraubenschaftes im ersten Verbindungsteil.

Der Befestigungsbolzen oder Schraubenschaft kann ferner auch über eine Warmfügung, insbesondere Schweissverbindung, an das zweite Verbindungsteil befestigt sein und von diesem abragen. Der Befestigungsbolzen kann ferner integraler Bestandteil des zweiten Verbindungsteils sein und von diesem abragen.

Die Verbindungsteile können neben Schrauben bsp. auch mittels Nieten verbunden sein.

In bevorzugter Ausführung ist das Langloch parallel oder im wesentlichen parallel zur Längsrichtung des Trägerarms, d.h. quer zur Fahrzeuglängsrichtung geführt. Dies gilt insbesondere für eine Verbindung zwischen zwei Trägerarmen. Das Langloch kann jedoch auch eine von der Ausrichtung des Trägerarms abweichende Orientierung aufweisen und bsp. eine in Fahrzeuglängsrichtung ausgelegte Richtungskomponente enthalten oder vollständig in Fahrzeuglängsrichtung orientiert sein.

In einer besonders bevorzugten Ausführung der Erfindung ist zwischen Seitenhalter und Trägerarm eine Langloch-Reibschlussverbindung vorgesehen, wobei der Seitenhalter eine parallel zur Trägerarmlängsrichtung verlaufende Anbindungswand, nachfolgend Querwand genannt, enthält. Der Seitenhalter enthält überdies eine Auflagefläche bzw. Auflagepunkt oder -linie zur vertikalen Abstützung des Trägerarms auf dem Seitenhalter zwecks Entlastung der Langloch-Reibschlussverbindung. Die Langloch-Reibschlussverbindung wird zwischen einer Profilwand des Trägerarms und der Querwand des Seitenhalters ausgebildet.

Der Seitenhalter weist in einer Weiterentwicklung der Erfindung eine in Fahrzeuglängsrichtung verlaufende Längswand auf, welche in einem Winkel, bevorzugt im rechten Winkel, zur Querwand angeordnet ist. Die Längs- und Querwand bilden bevorzugt ein Winkelelement aus.

Die Längswand enthält eine Öffnung, durch welche der Trägerarm zwecks Anbindung an den Seitenhalter mit seinem Endabschnitt geführt ist. Der Trägerarm ist dabei im Bereich der Durchtrittsöffnung punkt- oder linienförmig vertikal auf die Längswand abgestützt, so dass Kräfte mit vertikaler Komponente nicht vollumfänglich auf die Langlochverbindung übertragen werden.

Die Verbindungsteile sind bevorzugt aus Metall. Sie können jedoch auch aus Kunststoff, insbesondere aus einem faserverstärkten Kunststoff sein. Die Werkstoffwahl richtet sich hauptsächlich nach der Höhe des zu erzielenden Kraftniveaus, wobei der Werkstoff des ersten Verbindungsteils weicher sein sollte als der Werkstoff des Befestigungsbolzens, -schaftes bzw. der Schrauben.

Der Befestigungsbolzen, -schaft bzw. die Schraube besteht bevorzugt aus einem Stahlwerkstoff.

Die Verbindungsteile können aus einem Walzprodukt, wie Blech, einem Strangpressprofil, Gussteil oder einem Schmiedeteil hergestellt sein.

Das erste Verbindungsteil mit Langloch ist bevorzugt aus einer Aluminiumlegierung oder aus einem entsprechend weich-zähen Werkstoff. Das erste Verbindungsteil kann bsp. aus einer Aluminiumlegierung der Reihe AA 5xxx, AA 6xxx oder AA 7xxx sein und in den Zuständen T4, T5 oder T6 vorliegen.

Das zweite Verbindungsteil besteht bevorzugt ebenfalls aus einer Aluminiumlegierung, insbesondere aus einer Aluminiumlegierung der Reihe AA 5xxx, AA 6xxx und liegt bevorzugt im Zustand T4 bzw. T5 vor. Das zweite Verbindungsteil kann jedoch auch aus einem anderen Metall, wie z.B. Stahl oder aus Kunststoff gefertigt sein.

Mit der erfindungsgemässen Auswahl eines weichen und zähen Aluminiumwerkstoffes ergibt sich eine gleichmässige Energieaufnahme.

Bei einem Frontalaufprall wird der Trägerarm durch die in Fahrzeuglängsrichtung einwirkenden Kräfte zur Fahrgastzelle hin deformiert, d.h. gebogen. Nach Überwindung einer definierten Kraftschwelle wird der Verbindungsbolzen der Langloch-Reibschlussverbindung unter Absorption von Aufprallenergie längs durch das Langloch gezogen. Hierbei wird der Verbindungsbereich gelängt, ohne dass es zu einem Versagen der Verbindung selbst kommt. Erst wenn der Befestigungsbolzen den gesamten Weg im Langloch, dessen Länge entsprechend der vorgegebenen Sicherheitsspezifikationen zu definieren ist, zurück gelegt hat, kommt es zu einem Abreissen des Trägerarms von der Fahrzeugstruktur. Ist das Langloch ursprünglich parallel zur Trägerarmlängsrichtung ausgerichtet, so kann im Aufprallereignis aufgrund der Deformation des Trägerarms und der daran anschliessenden Fahrzeugstruktur die Ausrichtung des Langlochs ändern, indem dieses eine Richtungskomponente in Fahrzeuglängsrichtung erhält.

Der Trägerarm ist bevorzugt aus Aluminium oder einer Legierung davon. Er kann jedoch auch aus Stahl gefertigt sein. Der Trägerarm kann ein Extrusionsprofil oder aus einem Walzprodukt, insbesondere einem Walzblech, sein. Das Walzprodukt ist hierzu bevorzugt mittels Rollformen oder Abkanten zu einem Hohlprofil geformt und über Schweissverbindungen zum besagten Bauteil gefügt. Das besagte Bauteil kann auch aus verschweissten Halbschalen, insbesondere Blechhalbschalen, hergestellt sein. Der Trägerarm kann insbesondere aus einem längsverschweissten Rohrprofil bestehen.

Der Trägerarm kann überdies Halteelemente zur Anbindung von Funktionselementen enthalten. Der Trägerarm enthält unter anderem ein Halteelement zur Festlegung der Lenksäule. Ferner kann der Trägerarm Halteelemente zur Anbindung eines Stützarmes zum Mitteltunnel sowie zur Anbindung von Funktionselementen eines Beifahrer-Airbagsystems, eines Handschuhfaches, eines Knieschutzes oder von Funktionselementen der Innenraumbelüftung und/oder Klimatisierung enthalten.

Dank der erfindungsgemässen Anordnung einer Langloch-Reibschlussverbindung wird einerseits Aufprallenergie absorbiert und andererseits das Ausreissen von Trägerarmteilen von der Fahrzeugstruktur erheblich verzögert. Die besagte Verbindung erfüllt ihre Aufgabe auch im Falle eines Schrägaufpralles.

Die erfindungsgemässe Instrumententafelträgerstruktur findet bevorzugt Anwendung in Kraftfahrzeugen wie Personenkraftwagen (PKW), Kastenwagen, Lieferwagen, Personentransporter, Vans und Kleinbussen.

Im folgenden wird die Erfindung beispielhaft und mit Bezug auf die beiliegenden Zeichnungen näher erläutert. Es zeigen:

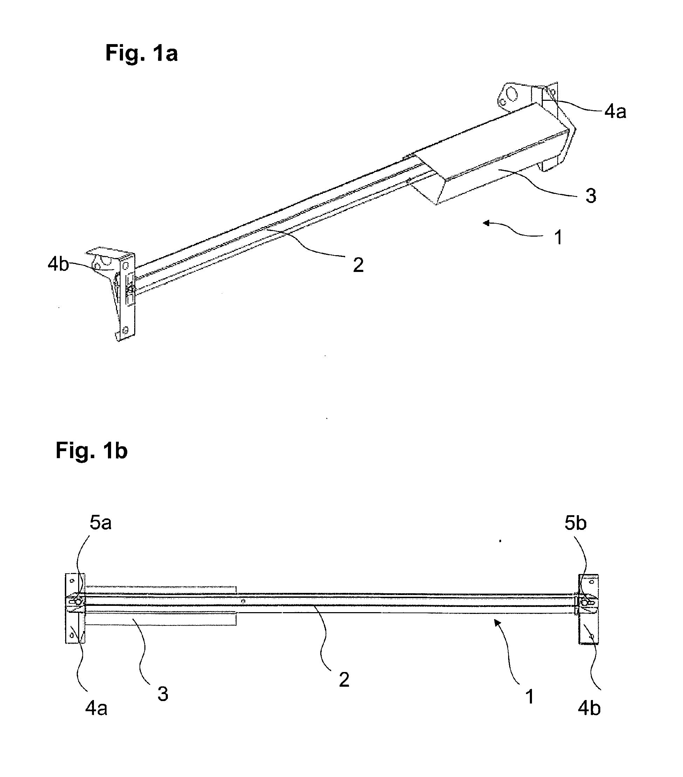

- Fig. 1a:: eine perspektivische Ansicht einer erfindungsgemässen Instrumententafelträgerstruktur;
- Fig. 1 b:: eine Frontansicht einer erfindungsgemässen Instrumententafelträgerstruktur;

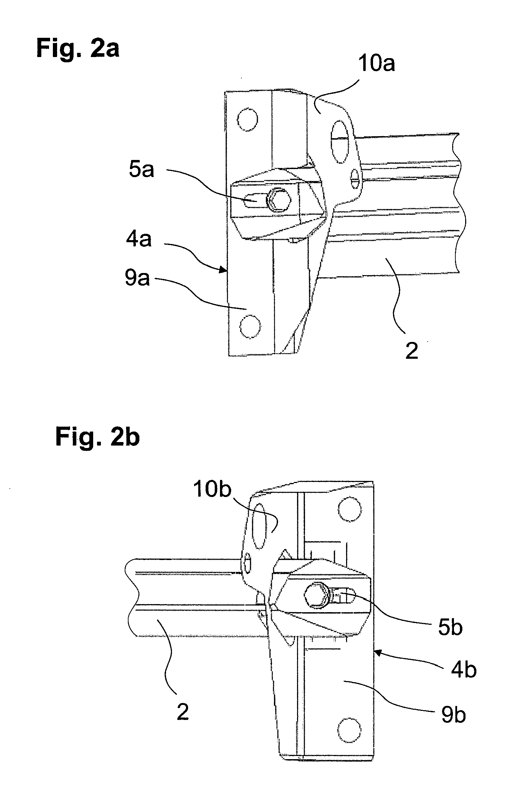

- Fig. 2a-2b:: eine perspektivische Ansicht eines Seitenhalters mit Trägerarm;
- Fig.3a-d:: eine schematische Ansicht einer Langlochverbindung gemäss einer ersten Ausführungsform;
- Fig. 4a-d:: eine schematische Ansicht einer Langlochverbindung gemäss einer zweiten Ausführungsform.

Die erfindungsgemäss fahrerseitig verstärkte Instrumententafelstruktur 1 gemäss Fig. 1a und 1b zeigt einen durchgehenden, als Querträger ausgebildeten Trägerarm 2 aus einem Hohlprofil, welcher an seinen beiden Endabschnitten mit Seitenhaltern 4a, 4b verbunden ist, welche wiederum an die Fahrzeugkarosserie, insbesondere an die A-Säulen angebunden sind (nicht gezeigt). Der Trägerarm 2 ist fahrerseitig mittels eines Abkantbleches 3 verstärkt. Das Abkantblech 3 ist hierzu mit seinen längslaufenden Kanten aussenseitig mit der Profilwand des Trägerarms 2 unter Ausbildung einer Tunnelstruktur verschweisst. Der Trägerarm 2 ist mit seinen beiden Endabschnitten über Langlochverbindungen 5a, 5b mit den Seitenhaltern 4a, 4b verschraubt.

Der Seitenhalter 4a, 4b enthält eine in Fahrzeuglängsrichtung verlaufende Längswand 10a, 10b mit einer Durchtrittsöffnung für den Trägerarm-Endabschnitt (Fig, 2a, 2b). Der Seitenhalter 4a, 4b enthält ferner eine im rechten Winkel zur Längswand 10a, 10b angeordnete und in Längsrichtung des Trägerarms 2 verlaufende Querwand 9a, 9b. Zur Anbindung des Trägerarms 2 an den Seitenhalter 4a, 4b ist dieser mit seinem Endabschnitt durch die Öffnung in der Längswand 10a, 10b geführt und liegt mit einer Profilseite der Querwand 9a, 9b an. Der Trägerarm ist über eine Langloch-Schraubverbindung mit der Querwand 9a, 9b verbunden. Das Langloch verläuft parallel zur Trägerarmlängsrichtung und ist in jener der Querwand 9a, 9b anliegenden Profilwand des Trägerarms 2 eingelassen. Der Seitenhalter 4a, 4b enthält ferner Anschlussstellen zur Anbindung an die Fahrzeugkarosserie.

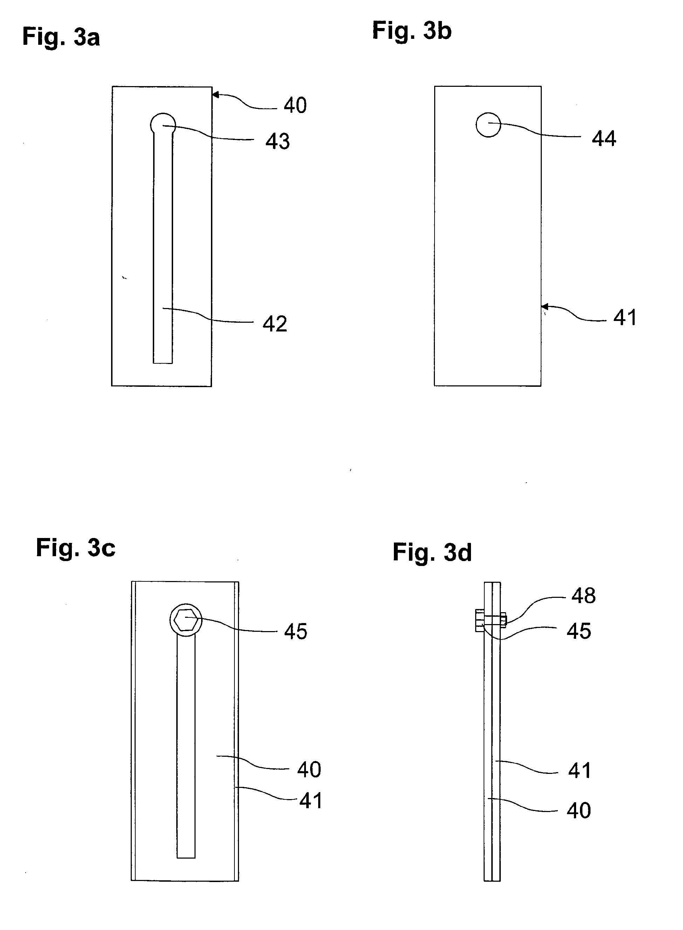

Die schematisch dargestellte Langlochverbindung gemäss Fig. 3a bis 3d (Draufsicht) enthält ein erstes Verbindungselement 40 mit einem Langloch 42 sowie einer endseitig angeordneten erweiterten Öffnung 43 zur Aufnahme eines Befestigungsmittels 45, insbesondere eines Schraubenschaftes. Ein zweites Verbindungselement 41 enthält eine Öffnung 44 zur Aufnahme des Schaftes des Befestigungsmittels 45. Die Breite des Langloches 42 ist kleiner als der Durchmesser des Schaftes des Befestigungsmittels. Zur Herstellung der Verbindung wird das Befestigungsmittel 45 mit seinem Schaft sowohl durch die Öffnung 44 des zweiten als auch durch die erweiterte Öffnung 43 des ersten Verbindungselementes geführt und fixiert, bsp. mittels Gegenmutter 48.

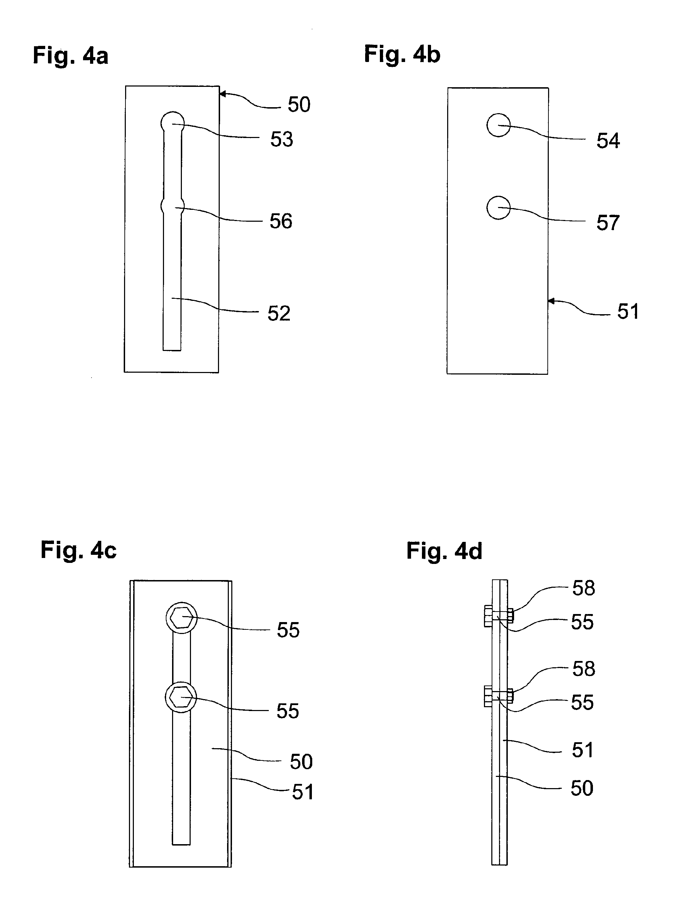

Die schematisch dargestellte Langlochverbindung gemäss Fig. 4a bis 4d (Draufsicht) enthält ein erstes Verbindungselement 50 mit einem Langloch 52 sowie einer endseitig und einer mittig im Langloch angeordneten erweiterten Öffnung 53, 56 zur Aufnahme eines Befestigungsmittels 55, insbesondere eines Schraubenschaftes. Ein zweites Verbindungselement 51 enthält zwei voneinander beabstandete Öffnungen 54, 57 zur Aufnahme des Schaftes der Befestigungsmittel 55. Die Öffnungen 54, 57 sind deckungsgleich mit den erweiterten Öffnungen 53, 56.

Die Breite des Langloches 52 ist kleiner als der Durchmesser des Schaftes der Befestigungsmittel 55. Zur Herstellung der Verbindung werden die Befestigungsmittel 55 mit ihrem Schaft sowohl durch die Öffnungen 54, 57 des zweiten als auch durch die erweiterten Öffnungen 53, 56 des ersten Verbindungselementes geführt und fixiert, bsp. mittels Gegenmutter 58.

## Patentansprüche

1. Instrumententafelträgerstruktur (1) eines Kraftfahrzeuges, enthaltend wenigstens einen quer zur Fahrzeuglängsrichtung verlaufenden Trägerarm (2), wobei die Instrumententafelträgerstruktur (1) fahrer- und beifahrerseitig über den wenigstens einen Trägerarm (2) an eine Karosseriestruktur angebunden ist, und zwischen der fahrer- und beifahrerseitigen Karosseriestruktur im Bereich der Instrumententafelträgerstruktur (1) wenigstens eine Reibschlussverbindung (5a, 5b) vorgesehen ist, welche im Aufprallereignis ein definiertes Zurückweichen des Trägerarms (2) erlaubt,
**dadurch gekennzeichnet, dass**
die Reibschlussverbindung (5a, 5b) eine Langloch-Reibschlussverbindung aus zwei sich überlappenden Verbindungsteilen ist, und ein erstes Verbindungsteil ein Langloch aufweist, durch welches wenigstens ein Befestigungsbolzen oder -schaft geführt ist, über welchen das erste Verbindungsteil mit dem zweiten Verbindungsteil reibschlüssig verbunden ist, derart dass sich die Verbindungsteile bei Überschreiten eines bestimmten Kraftniveaus unter Abbau von kinetischer Energie relativ zueinander verschieben, wobei der Befestigungsbolzen oder -schaft unter Längung des Verbindungsbereichs durch das Langloch gezogen wird.

2. Instrumententafelträgerstruktur nach Anspruch 1, wobei die Langloch-Reibschlussverbindung (5a, 5b) den Trägerarm (2) direkt oder indirekt mit der fahrerseitigen und/oder beifahrerseitigen Fahrzeugkarosserie, insbesondere mit den A-Säulen, verbindet.

3. Instrumententafelträgerstruktur nach einem der Ansprüche 1 bis 2, wobei das erste oder zweite Verbindungsteil durch den Trägerarm (2) selbst und das zweite oder erste Verbindungsteil durch ein Verbindungselement, insbesondere ein Winkelelement, oder durch die Fahrzeugkarosserie selbst, insbesondere durch die A-Säulen, ausgebildet wird.

4. Instrumententafelträgerstruktur nach Anspruch 3, wobei das erste Verbindungsteil dem Trägerarm (2) und das zweite Verbindungsteil einem Seitenhalter (4a, 4b) oder der A-Säule entspricht.

5. Instrumententafelträgerstruktur nach einem der Ansprüche 1 bis 4, wobei der Trägerarm (2) als ein von der fahrerseitigen zur beifahrerseitigen Karosseriestruktur durchgehender Trägerarm ausgebildet ist und mit seinen beiden freien Endabschnitten direkt oder indirekt an die fahrer- bzw. beifahrerseitige Karosseriestruktur angebunden ist, wobei wenigstens eine, vorzugsweise beide, Anbindungen über eine Langloch-Reibschlussverbindung erfolgen.

6. Instrumententafelträgerstruktur nach einem der Ansprüche 1 bis 4, wobei die Instrumententafelträgerstruktur mehrere, vorzugsweise zwei, miteinander zu einem Querträger verbundene Trägerarme enthält, und wenigstens eine der Verbindungen zwischen zwei Trägerarmen eine Langloch-Reibschlussverbindung ist.

7. Instrumententafelträgerstruktur nach einem der Ansprüche 1 bis 6, wobei das Langloch einen Langlochbereich aufweist, welcher eine geringere Weite aufweist als der Durchmesser des Befestigungsbolzens oder -schaftes, so dass bei einer Längung des Verbindungsbereichs der Befestigungsbolzen oder - schaft unter Aufweitung des Langloches durch das Langloch gezogen wird.

8. Instrumententafelträgerstruktur nach einem der Ansprüche 1 bis 7, wobei die Langloch-Reibschlussverbindung eine Schraubverbindung ist, enthaltend einen Schraubenschaft mit Gewinde sowie eine Schraubenmutter, und der Schraubenschaft durch das Langloch geführt und auf seiner Austrittseite über die Schraubenmutter reibschlüssig fixiert ist.

9. Instrumententafelträgerstruktur nach Anspruch 8, wobei die Schraubverbindung einen Schraubenschaft mit einem Schraubenkopf enthält und der Schraubenschaft durch eine Öffnung im zweiten Verbindungsteil sowie durch das Langloch im ersten Verbindungsteil hindurch geführt und auf seiner Austrittseite über die Schraubenmutter reibschlüssig fixiert ist.

10. Instrumententafelträgerstruktur nach einem der Ansprüche 1 bis 8, wobei der Befestigungsbolzen oder Schraubenschaft an das zweite Verbindungsteil über eine Warmfügung, insbesondere Schweissverbindung, befestigt ist und von diesem abragt.
